# EUROPÄISCHE PATENTANMELDUNG

(11) **EP 2 559 963 A2**
(43) Veröffentlichungstag der Anmeldung: **20.02.2013**
(21) Anmeldenummer: 12177020.0
(22) Anmeldetag: 19.07.2012
(51) Int. Cl.: F28D 20/02

(54) **Latentwärmespeichervorrichtuntg**

(30) Priorität: 19.08.2011 DE 102011052864
(71) Anmelder: REHAU AG + Co, 95111 Rehau (DE)
(72) Erfinder: Schettler, Thomas, 95111 Rehau (DE); Krause, Reinhold, 8053 Zürich (CH); Schwarze, Thomas, 70374 Stuttgart (DE); Fezer, Amaru, 13353 Berlin (DE)

(57) **Zusammenfassung**

Die Erfindung betrifft eine Latentwärmespeichervorrichtung (1) mit verbundenen Latentwärmespeicherabschnitten (2), die entlang einer Linie (L) angeordnet sind. Um einen ausreichenden Wärmeaustausch mit einem Wärmeträgermedium, insbesondere mit der Umgebungsluft, auch dann zu gewährleisten, wenn die Latentwärmespeicherabschnitte verhältnismäßig dicht gepackt sind, ist erfindungsgemäß vorgesehen, dass wenigstens ein Abstandshalter (3) im Wesentlichen quer zur Linie vorspringt, um wenigstens einen der Latentwärmespeicherabschnitte auf Abstand zu einem angrenzenden Element zu halten.

## Beschreibung

Die Erfindung betrifft eine Latentwärmespeichervorrichtung mit verbundenen Latentwärmespeicherabschnitten, die entlang einer Linie angeordnet sind.

Eine solche Latentwärmespeichervorrichtung ist beispielsweise aus der EP 1 573 261 B9 oder aus der DE 10 2009 032 918 A1 bekannt.

Eine derartige Latentwärmespeichervorrichtung, die bspw. zur Temperaturregulierung in Wohn- oder Büroräumen eingesetzt wird, kann in einem Arbeitstemperaturbereich, bspw. zwischen 22 °C und 24 °C, aufgrund eines Phasenübergangs eines Wärmespeichermediums große Wärmemengen aufnehmen und abgeben, so dass die Wohn- oder Büroräume ohne Aufwand von elektrischer Energie bedarfsgerecht gekühlt oder erwärmt werden können. Die Grundlagen der Latentwärmespeicherung sind hinlänglich bekannt und werden im Rahmen dieser Offenbarung nicht näher erläutert.

Bei der gattungsgemäßen Latentwärmespeichervorrichtung stellt sich die Aufgabe, einen ausreichenden Wärmeaustausch mit einem Wärmeträgermedium, insbesondere mit der Umgebungsluft, auch dann zu gewährleisten, wenn die Latentwärmespeicherabschnitte verhältnismäßig dicht gepackt sind.

Diese Aufgabe wird erfindungsgemäß gelöst durch die Latentwärmespeichervorrichtung mit verbundenen Latentwärmespeicherabschnitten gemäß Anspruch 1, wobei die Latentwärmespeicherabschnitte entlang einer Linie angeordnet sind, wobei wenigstens ein Abstandshalter im Wesentlichen quer zur Linie vorspringt, um wenigstens einen der Latentwärmespeicherabschnitte auf Abstand zu einem angrenzenden Element zu halten. Dadurch kann verhindert werden, dass sich der Latentwärmespeicherabschnitt an ein angrenzendes Element, bspw. eine Innenwand eines mit der Latentwärmespeichervorrichtung ausgekleideten Luftschachts oder eines beliebig dimensionierten Gehäuseelementes oder an einen anderen Latentwärmespeicherabschnitt, anlegt und somit ein Wärmeaustausch mit einem Wärmeträgermedium über die Oberfläche dieses Latentwärmespeicherabschnitts deutlich reduziert ist. Dadurch wird eine selbstorganisierende Latentwärmespeichervorrichtung geschaffen, die ein gegebenes Volumen, bspw. ein Volumen eines mit der Latentwärmespeichervorrichtung ausgekleideten Luftschachts oder eines beliebig dimensionierten Gehäuseelementes, mit geringem Aufwand und mit möglichst hoher Dichte ausfüllt, aber dennoch einen optimalen Wärmeaustausch mit einem Wärmeträgermedium über die Oberflächen der einzelnen Latentwärmespeicherabschnitte ermöglicht. Nach dieser Maßgabe kann der Aufbau der Latentwärmespeichervorrichtung und ihrer Bestandteile optimiert werden. Die Linie ist vorzugsweise eine Linie, die sich auf kürzestem Wege durch die Latentwärmespeicherabschnitte der Latentwärmespeichervorrichtung erstreckt.

Bevorzugte Weiterbildungen der Erfindung sind Gegenstände der Unteransprüche.

Es kann von Vorteil sein, wenn die Latentwärmespeichervorrichtung wenigstens eine der folgenden Anforderungen erfüllt:
- Wenigstens einige, vorzugsweise alle der Latentwärmespeicherabschnitte sind in einer Ebene angeordnet.
- Die Linie verläuft zumindest abschnittsweise gerade, spiralförmig, schneckenförmig, schleifenförmig, mäanderförmig und/oder zickzackförmig.
- Die Linie erstreckt sich in einer im Wesentlichen vertikalen Ebene, vorzugsweise in einer im Wesentlichen vertikalen Richtung.
- Die Linie ist in einer, zwei, drei oder mehr Krümmungsebenen gekrümmt.
- Die Latentwärmespeichervorrichtung bildet zwischen wenigstens einem der Latentwärmespeicherabschnitte, wenigstens einem der Abstandshalter und wenigstens dem einen angrenzenden Element einen vorzugsweise linear durchgehenden Kanal.
- Die Latentwärmespeichervorrichtung bildet zwischen wenigstens einem der Latentwärmespeicherabschnitte und wenigstens einem der Abstandshalter einen vorzugsweise linear durchgehenden Kanal.

Diese Eigenschaften sind besonders vorteilhaft, um ein gegebenes Volumen wie das Volumen eines mit der Latentwärmespeichervorrichtung ausgekleideten Luftschachts oder eines beliebig dimensionierten Gehäuseelementes mit hoher Dichte auszufüllen und gleichzeitig einen optimalen Wärmeaustausch mit einem Wärmeträgermedium über die Oberflächen der einzelnen Latentwärmespeicherabschnitte zu erreichen. Insbesondere kann die Latentwärmespeichervorrichtung mit bspw. kettenförmig verbunden Latentwärmespeicherabschnitten gefaltet werden und in mehreren Lagen zu einer Stapelanordnung zusammengeführt werden. Dabei ist es besonders vorteilhaft, wenn bei dieser Stapelanordnung wenigstens ein Stapelzwischenraum zwischen benachbarten Lagen vorsehen wird, was zur Homogenisierung z.B. einer Luftdurchströmung beitragen kann.

Es kann hilfreich sein, wenn zumindest einer der Latentwärmespeicherabschnitte wenigstens eine der folgenden Anforderungen erfüllt:
- Der Latentwärmespeicherabschnitt ist als Hohlkörper ausgebildet und vorzugsweise mit einem Phasenwechselmaterial befüllt.
- Der Latentwärmespeicherabschnitt ist im Wesentlichen kissenförmig ausgebildet.
- Der Latentwärmespeicherabschnitt ist flach ausgebildet und erstreckt sich im Wesentlichen in einer Ebene, welche vorzugsweise die Linie und eine dazu senkrechte Linie umfasst.
- Der Latentwärmespeicherabschnitt umfasst einen Hohlraum, der aus wenigstens einer flexiblen Folie mit wenigstens einer Schweißnaht ausgebildet ist, wobei die Schweißnaht den Hohlraum zumindest abschnittsweise, vorzugsweise vollumfänglich, umgibt und/oder verschließt, wobei sich die Schweißnaht bevorzugt zumindest abschnittsweise entlang der Linie und/oder zumindest abschnittsweise quer zur Linie und/oder zumindest abschnittsweise quer zu einer Erstreckungsrichtung des Abstandshalters erstreckt, wobei die Schweißnaht weiter bevorzugt zumindest abschnittsweise linear und/oder zumindest abschnittsweise bogenförmig verläuft, wobei die Schweißnaht besonders bevorzugt wenigstens ein totes Ende aufweist, das in Richtung des Hohlraums weist.
- Der Latentwärmespeicherabschnitt ist identisch zu mindestens einem weiteren Latentwärmespeicherabschnitt, vorzugsweise einem entlang der Linie benachbarten Latentwärmespeicherabschnitt, ausgebildet.
- Der Latentwärmespeicherabschnitt ist mit wenigstens einem weiteren Latentwärmespeicherabschnitt, vorzugsweise einem entlang der Linie benachbarten Latentwärmespeicherabschnitt, über wenigstens ein Zwischenstück verbunden, wobei das Zwischenstück zumindest abschnittsweise linear und/oder zumindest abschnittsweise bogenförmig verläuft.
- Der Latentwärmespeicherabschnitt ist mit wenigstens einem weiteren Latentwärmespeicherabschnitt, vorzugsweise einem entlang der Linie benachbarten Latentwärmespeicherabschnitt, beweglich verbunden.
- Der Latentwärmespeicherabschnitt ist gegenüber wenigstens einem entlang der Linie benachbarten Latentwärmespeicherabschnitt um eine Achse schwenkbar, die sich im Wesentlichen quer zur Linie und/oder quer zu einer Erstreckungsrichtung des Abstandshalters erstreckt.
- Der Latentwärmespeicherabschnitt umfasst eine Aufnahme, in welcher ein Abstandshalter zumindest abschnittsweise aufnehmbar, vorzugsweise verrastbar ist, wobei die Aufnahme bevorzugt als Einschnürung ausgebildet ist.
- Der Latentwärmespeicherabschnitt umfasst einen Klebstoffapplikationsbereich, in welchem ein Abstandshalter mit dem Latentwärmespeicherabschnitt verklebbar ist, wobei der Klebstoffapplikationsbereich vorzugsweise als Aufnahme ausgebildet ist, in welcher der Abstandshalter zumindest abschnittsweise aufnehmbar, vorzugsweise verrastbar ist.
- Wenigstens einige der Latentwärmespeicherabschnitte sind um zueinander parallele Schwenkachsen schwenkbar.
- Die Latentwärmespeicherabschnitte sind kettenförmig, netzförmig, mattenförmig oder gitterförmig, vorzugsweise raumgitterförmig, angeordnet und/oder verbunden.

Diese Eigenschaften sind besonders hilfreich, um eine möglichst anpassbare, vielseitig verwendbare Latentwärmespeichervorrichtung mit verhältnismäßig geringem Aufwand herzustellen.

Es kann nützlich sein, wenn der Abstandshalter wenigstens eine der folgenden Anforderungen erfüllt:
- Der Abstandshalter ist an wenigstens einem der Latentwärmespeicherabschnitte und/oder an wenigstens einem Zwischenstück zwischen zwei Latentwärmespeicherabschnitten angeordnet.
- Der Abstandshalter ist im Wesentlichen noppenförmig, stegförmig, rippenförmig, falzförmig, kammförmig oder dergleichen ausgebildet.
- Der Abstandshalter umgibt zumindest abschnittsweise, vorzugsweise vollumfänglich, wenigstens einen der Latentwärmespeicherabschnitte.
- Der Abstandshalter erstreckt sich zumindest abschnittsweise, vorzugsweise vollständig, in einer zur Linie senkrechten Ebene.
- Der Abstandshalter ist als Extrusionsprofil ausgebildet.
- Der Abstandshalter ist zumindest abschnittsweise als offenes Profil, vorzugsweise als V-Profil oder als T-Profil ausgebildet.
- Der Abstandshalter ist zumindest abschnittsweise als geschlossenes Profil, vorzugsweise als Hohlprofil, bevorzugt als Dreieckshohlprofil bzw. Δ-Profil oder als Rechteckhohlprofil ausgebildet.
- Der Abstandshalter ist mit der Latentwärmespeichervorrichtung verbunden, vorzugsweise kraftschlüssig, formschlüssig, stoffschlüssig, bevorzugt fest und/oder unlösbar mit der Latentwärmespeichervorrichtung verbunden.
- Der Abstandshalter ist mit wenigstens einem der Latentwärmespeicherabschnitte und/oder mit wenigstens einem Zwischenstück zwischen zwei Latentwärmespeicherabschnitten verbunden.
- Der Abstandshalter ist monolithisch mit der Latentwärmespeichervorrichtung, vorzugsweise mit wenigstens einem der Latentwärmespeicherabschnitte und/oder mit wenigstens einem Zwischenstück zwischen zwei Latentwärmespeicherabschnitten ausgebildet.
- Der Abstandshalter ist an das Material der Latentwärmespeichervorrichtung angeformt.
- Der Abstandshalter ist durch Umformung, vorzugsweise durch Faltung, aus dem Material der Latentwärmespeichervorrichtung ausgebildet.
- Der Abstandshalter besteht aus Schaumstoff.
- Der Abstandshalter steht quer zur Linie über wenigstens einen Latentwärmespeicherabschnitt, vorzugsweise über wenigstens einen entlang der Linie benachbarten Latentwärmespeicherabschnitt hervor.
- Der Abstandshalter steht in wenigstens einer Richtung, vorzugsweise in unterschiedlichen Richtungen, bevorzugt in entgegen gesetzten Richtungen, über wenigstens einen Latentwärmespeicherabschnitt hervor.
- Der Abstandshalter ist aerodynamisch vorteilhaft ausgebildet und/oder angeordnet und/oder ausgerichtet.
- Der Abstandshalter ist als Luftleitfläche ausgebildet, die eine Luftströmung in Richtung wenigstens eines Latentwärmespeicherabschnitts, vorzugsweise in Richtung wenigstens eines entlang der Linie benachbarten Latentwärmespeicherabschnitts lenkt.

Aufgrund dieser Eigenschaften kann der Abstandshalter seine bevorzugte Funktion, wenigstens einen der Latentwärmespeicherabschnitte auf Abstand zu einem angrenzenden Element zu halten, um so einen optimalen Wärmeaustausch mit einem Wärmeträgermedium über die Oberfläche dieses Latentwärmespeicherabschnitts zu erreichen, ideal erfüllen. Zudem kann ein Abstandshalter mit einigen dieser Eigenschaften mit verhältnismäßig geringem Aufwand hergestellt werden.

Es kann aber auch praktisch sein, wenn eine Mehrzahl der Abstandshalter wenigstens eine der folgenden Anforderungen erfüllt:
- Die Abstandshalter sind in regelmäßigen Abständen entlang der Linie angeordnet.
- Die Abstandshalter stehen in Bezug auf die Linie in jeweils in derselben Richtung hervor.
- Die Abstandshalter stehen in Bezug auf die Linie in einem regelmäßig wiederkehrenden Muster in unterschiedlichen Richtungen hervor.
- Die Abstandshalter stehen in Bezug auf die Linie in diametral entgegen gesetzten Richtungen hervor.
- Die Abstandshalter erstrecken sich in im Wesentlichen parallelen Ebenen und/oder sind im Wesentlichen parallel zueinander angeordnet.

Diese Eigenschaften ermöglichen einen besonders regelmäßigen oder symmetrischen Aufbau der Latentwärmespeichervorrichtung, so dass ein gegebenes Volumen wie das Volumen eines mit der Latentwärmespeichervorrichtung ausgekleideten Luftschachts oder eines beliebig dimensionierten Gehäuseelementes mit besonders hoher Dichte ausgefüllt werden kann, und eine besonders hohe Energiedichte erreichbar ist.

Es kann sich als nützlich erweisen, wenn die Latentwärmespeichervorrichtung elastisch oder plastisch verformbar ist. Dadurch kann die Latentwärmespeichervorrichtung für verschiedene Anwendungen individuell konfektioniert werden.

Es kann aber auch hilfreich sein, wenn die Latentwärmespeichervorrichtung als Folienschlauch mit wenigstens einer Foliennaht ausgebildet ist, wobei sich die Foliennaht im Wesentlichen entlang der Linie erstreckt, wobei die Foliennaht bevorzugt an einem der beiden Längsränder der Latentwärmespeichervorrichtung oder dazwischen, besonders bevorzugt zwischen den beiden Längsrändern der Latentwärmespeichervorrichtung mittig und/oder parallel dazu verläuft. Eine derartige Latentwärmespeichervorrichtung ist in einem kontinuierlichen Verfahren mit vergleichsweise geringem Aufwand herstellbar. Die Foliendicke kann beispielsweise im Bereich von 0,01 mm bis 2 mm, vorzugsweise im Bereich von 0,05 mm bis 1 mm, bevorzugt im Bereich von 0,1 mm bis 0,5 mm liegen. Eine bevorzugte Foliendicke ist 0,15 mm. Die Folie kann aus Kunststoff und/oder Metall bestehen. Sie wird vorzugsweise in einem kontinuierlichen Verfahren extrudiert und abschnittsweise intermittierend mit Phasenwechselmaterial befüllt und verschweißt. Vorteilhafte Materialien für den Folienschlauch sind Elastomere oder thermoplastische Kunststoffe, vorzugsweise Polyamid (PA), Polyethylen (PE), Polypropylen (PP), Polyvinylchlorid (PVC), Polymethylmethacrylat (PMMA), Polyethylenterephtalat (PET) oder Polyethylentetrafluorethylen (PTFE).

Ein weiterer Aspekt dieser Erfindung betrifft eine Latentwärmespeichervorrichtung mit verbundenen Latentwärmespeicherabschnitten, vorzugsweise nach wenigstens einer der vorangehenden Ausführungen, wobei einige der Latentwärmespeicherabschnitte entlang einer ersten Linie angeordnet sind, wobei wenigstens einer der Latentwärmespeicherabschnitte auf wenigstens einer von der ersten Linie abzweigenden, zweiten Linie angeordnet ist. Dadurch kann die Latentwärmespeichervorrichtung anstelle eines eindimensionalen Aufbaus auch einen zwei- oder dreidimensionalen Grundaufbau aufweisen.

Es kann auch vorteilhaft sein, wenn die Latentwärmespeicherabschnitte matrixförmig in Reihen und Spalten angeordnet sind. Dadurch weist die Latentwärmespeichervorrichtung einen regelmäßigen Aufbau auf, was für eine möglichst gleichmäßige Energiebeladung oder -abgabe hilfreich ist.

Noch ein weiterer Aspekt dieser Erfindung betrifft ein Verfahren zur Herstellung einer Latentwärmespeichervorrichtung, vorzugsweise einer Latentwärmespeichervorrichtung nach wenigstens einer der vorangehenden Ausführungen, umfassend die Schritte:
- Bereitstellen einer Latentwärmespeichervorrichtung mit verbundenen Latentwärmespeicherabschnitten und wenigstens einem Abstandhalter;
- Anordnen der Latentwärmespeicherabschnitte und des Abstandhalters, so dass sich zwischen wenigstens einem der Latentwärmespeicherabschnitte und dem Abstandshalter und gegebenenfalls einem angrenzenden Element ein durchgehender Kanal bildet.

Dadurch kann ein optimaler Wärmeaustausch mit einem Wärmeträgermedium über die Oberfläche dieses Latentwärmespeicherabschnitts sichergestellt werden.

Weitere bevorzugte Weiterbildungen der Erfindung ergeben sich durch beliebige Kombinationen der in den Ansprüchen, den Zeichnungen und der Beschreibung offenbarten Merkmale.

### Kurze Beschreibung der Figuren

- Fig. 1: zeigt (a) eine Aufsicht und (b) eine Seitenansicht einer erfindungsgemäßen Latentwärmespeichervorrichtung nach dem ersten Ausführungsbeispiel.
- Fig. 2-7: zeigen Aufsichten von erfindungsgemäßen Latentwärmespeichervorrichtungen nach den Ausführungsbeispielen zwei bis sieben.
- Fig. 8: zeigt schematisch eine parallele Anordnung von erfindungsgemäßen Latentwärmespeichervorrichtungen.
- Fig. 9a: zeigt schematisch eine alternierende Anordnung von erfindungsgemäßen Latentwärmespeichervorrichtungen.
- Fig. 9b: zeigt eine Abwandlung der alternierenden Anordnung von erfindungsgemäßen Latentwärmespeichervorrichtungen aus Fig. 9a.
- Fig. 9c-e: zeigen schematisch einen Faltungsprozess zur Herstellung eines zickzackförmig gefalteten Abstandshalters, der in entgegen gesetzten Richtungen senkrecht zur Linie L vorspringt.
- Fig. 10: zeigt schematisch die Schritte der Herstellung einer erfindungsgemäßen Latentwärmespeichervorrichtung nach dem achten Ausführungsbeispiel.
- Fig. 11: zeigt eine vorteilhafte Anordnung einer erfindungsgemäßen Latentwärmespeichervorrichtung nach dem neunten Ausführungsbeispiel.
- Fig. 12: zeigt eine vorteilhafte Anordnung von erfindungsgemäßen Latentwärmespeichervorrichtungen nach dem zehnten Ausführungsbeispiel.
- Fig. 13: zeigt schematisch die Schritte der Herstellung der erfindungsgemäßen Latentwärmespeichervorrichtung nach dem achten Ausführungsbeispiel gemäß Fig. 10 in einer anderen, perspektivischen Ansicht.
- Fig. 14: zeigt eine perspektivische Ansicht einer erfindungsgemäßen Latentwärmespeichervorrichtung nach dem elften Ausführungsbeispiel.
- Fig. 15: zeigt eine perspektivische Ansicht einer erfindungsgemäßen Latentwärmespeichervorrichtung nach dem zwölften Ausführungsbeispiel.

### Detaillierte Beschreibung der bevorzugten Ausführungsbeispiele

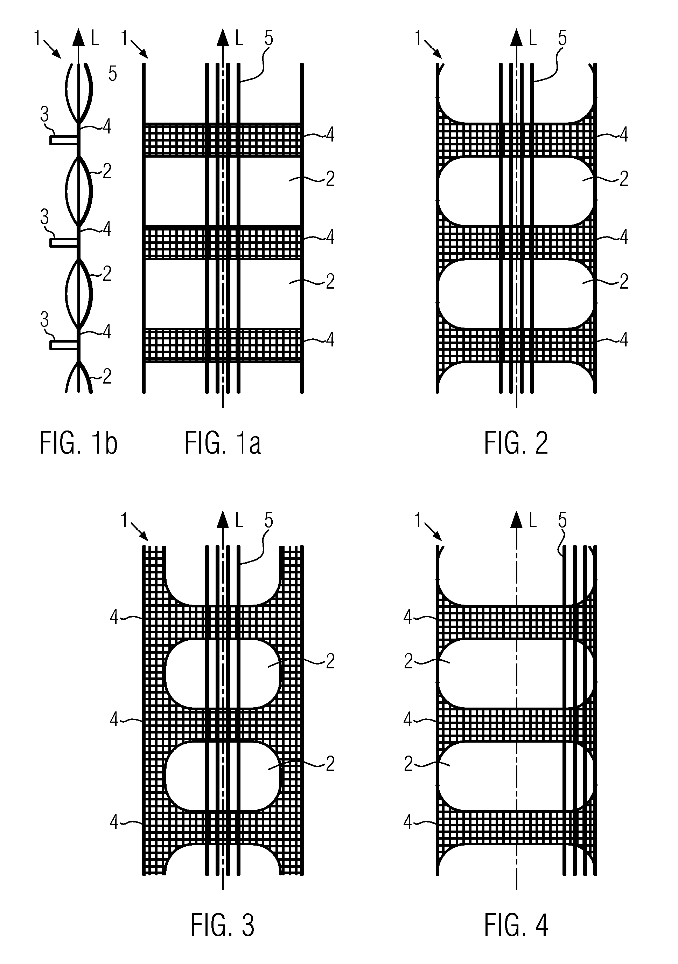

Die bevorzugten Ausführungsbeispiele werden nachstehend mit Bezug auf Fig. 1 bis 15 im Detail beschrieben.

### Erstes Ausführungsbeispiel

Die erfindungsgemäße Latentwärmespeichervorrichtung 1 nach dem ersten Ausführungsbeispiel umfasst eine Vielzahl beweglich verbundener Latentwärmespeicherabschnitte 2, die entlang einer Linie L angeordnet sind. Die Latentwärmespeichervorrichtung 1 ist als Folienschlauch mit einer Foliennaht 5 hergestellt. Gemäß der Aufsicht in Fig. 1 a verläuft die Foliennaht 5 auf einer Seite der Latentwärmespeichervorrichtung 1 mittig zwischen den beiden Längsrändern entlang der Linie L. Jeder Latentwärmespeicherabschnitt 2 ist als flacher, kissenförmiger Hohlkörper ausgebildet, der sich im Wesentlichen in einer Ebene erstreckt, welche die Linie L und eine dazu senkrechte Linie umfasst, und ist mit einem Phasenwechselmaterial befüllt. Ein Hohlraum jedes Latentwärmespeicherabschnitts 2 ist aus der flexiblen Folie des Folienschlauchs durch zwei lineare Schweißnähte ausgebildet, die den Hohlraum jeweils senkrecht zur Linie L verschließen. Die Latentwärmespeicherabschnitte 2 sind identisch ausgebildet und mit jeweils entlang der Linie L benachbarten Latentwärmespeicherabschnitten 2 über ein Zwischenstück 4, das in diesem Fall durch die Schweißnaht gebildet wird, beweglich kettenförmig verbunden. Die Schweißnähte bilden zueinander parallele Gelenk- oder Schwenkachsen, so dass die Latentwärmespeicherabschnitte 2 um zueinander parallele Schwenkachsen schwenkbar sind.

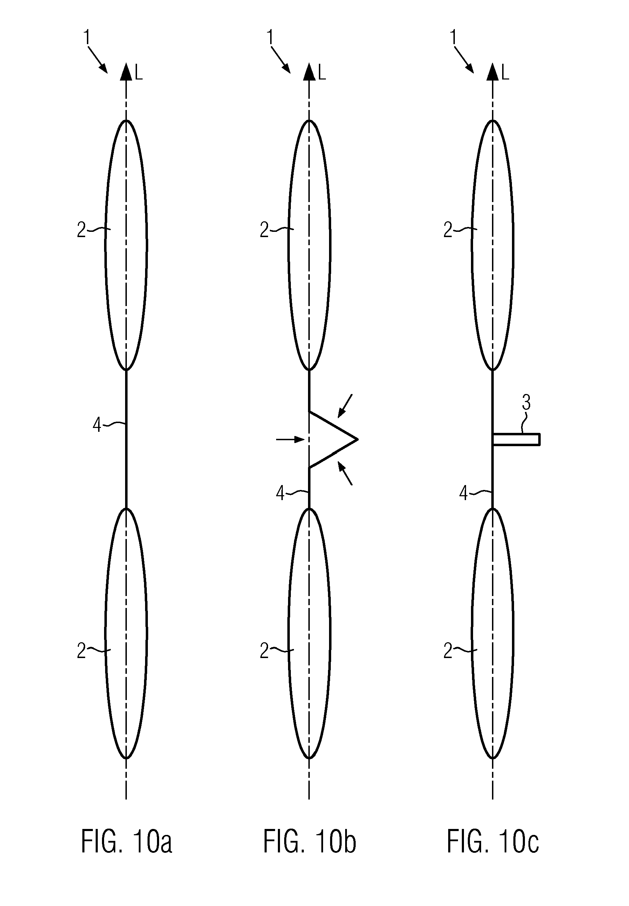

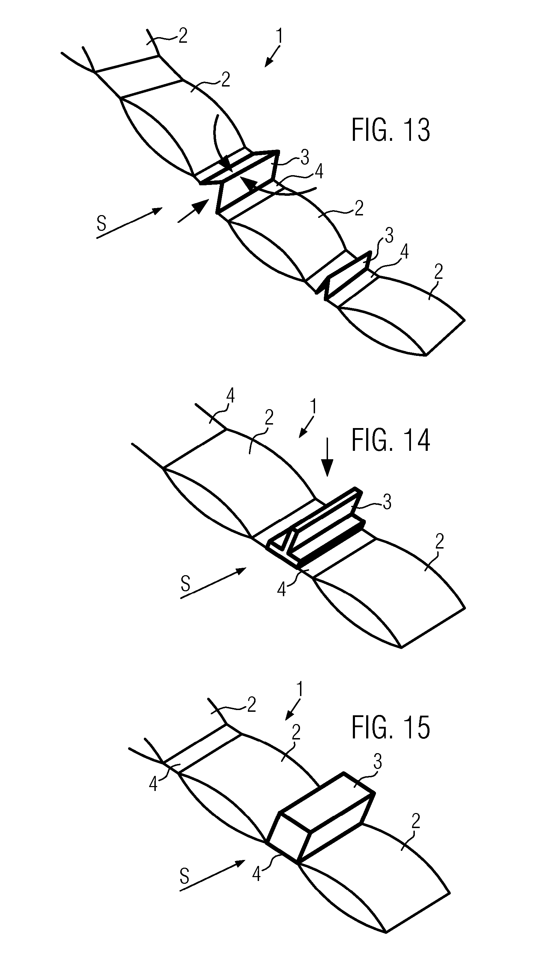

In der Seitenansicht gemäß Fig. 1b sind die Abstandshalter 3 zu erkennen, die im Wesentlichen quer zur Linie L auf der von der Foliennaht 5 abgewandten Seite der Latentwärmespeichervorrichtung 1 vorspringen, um die Latentwärmespeicherabschnitte 2 auf Abstand zu einem angrenzenden Element zu halten. Die Abstandshalter 3 sind in dieser Ausführung rippenförmig ausgebildet und erstrecken sich jeweils in einer Ebene senkrecht zur Linie L von jeweils einem Zwischenstück 4. Die Abstandshalter 3 erstrecken sich vorzugsweise über die gesamte Breite der Latentwärmespeichervorrichtung 1, so dass die Breite der Abstandshalter 3 der Breite der Latentwärmespeicherabschnitte 2 entspricht. Jeder Abstandshalter 3 kann als Extrusionsprofil ausgebildet sein und ist im vorliegenden Fall ein offenes Profil bzw. ein I-Profil, das stoffschlüssig mit dem Zwischenstück 4 verbunden ist. Der Abstandshalter 3 kann aber auch monolithisch mit der Latentwärmespeichervorrichtung 1 ausgebildet sein, wie später im Zusammenhang mit Fig. 10 und 13 verdeutlicht wird. Die Abstandshalter 3 sind in regelmäßigen Abständen entlang der Linie L angeordnet und stehen in Bezug auf die Linie L in jeweils derselben Richtung hervor, so dass sie in parallelen Ebenen im Wesentlichen parallel zueinander angeordnet sind.

Die Latentwärmespeichervorrichtung 1 ist elastisch oder plastisch verformbar und in wenigstens eine der nachstehend beschriebenen Anordnungen/Konfigurationen überführbar:
- Eine Anordnung/Konfiguration, in welcher die Latentwärmespeicherabschnitte 2 in einer Ebene angeordnet sind.
- Eine Anordnung/Konfiguration, in welcher die Linie L zumindest abschnittsweise gerade, spiralförmig, schneckenförmig, schleifenförmig, mäanderförmig und/oder zickzackförmig verläuft.
- Eine Anordnung/Konfiguration, in welcher die Linie L sich in einer im Wesentlichen vertikalen Ebene, vorzugsweise in einer im Wesentlichen vertikalen Richtung erstreckt.
- Eine Anordnung/Konfiguration, in welcher die Linie L in einer, zwei, drei oder mehr Krümmungsebenen gekrümmt ist.
- Eine Anordnung/Konfiguration, in welcher die Latentwärmespeichervorrichtung 1 zwischen wenigstens einem der Latentwärmespeicherabschnitte 2 und wenigstens einem Abstandshalter 3 und wenigstens einem angrenzenden Element einen linear durchgehenden Luftkanal bildet.
- Eine Anordnung/Konfiguration, in welcher die Latentwärmespeichervorrichtung 1 zwischen wenigstens einem der Latentwärmespeicherabschnitte 2 und wenigstens einem Abstandshalter 3 einen linear durchgehenden Luftkanal bildet.

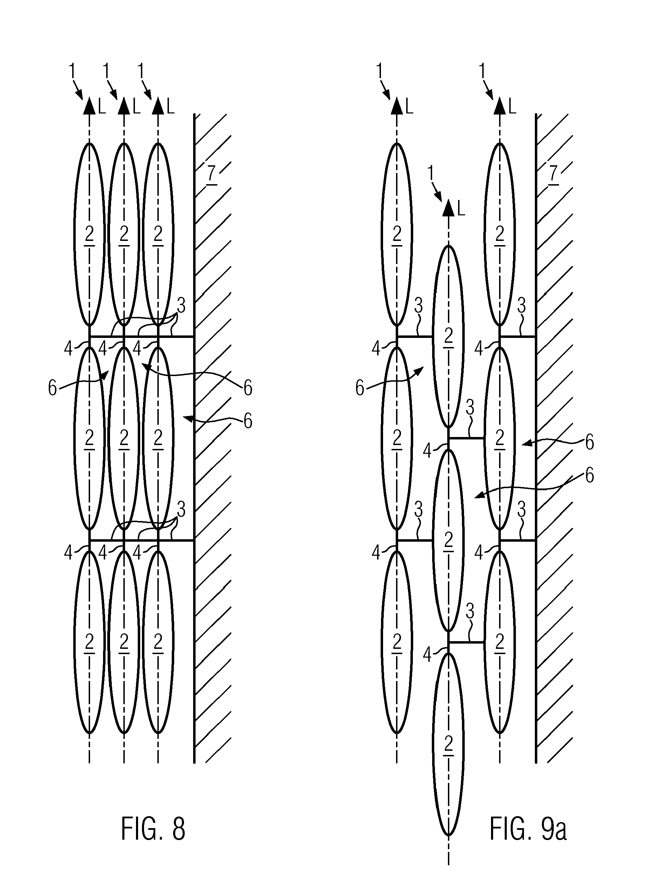

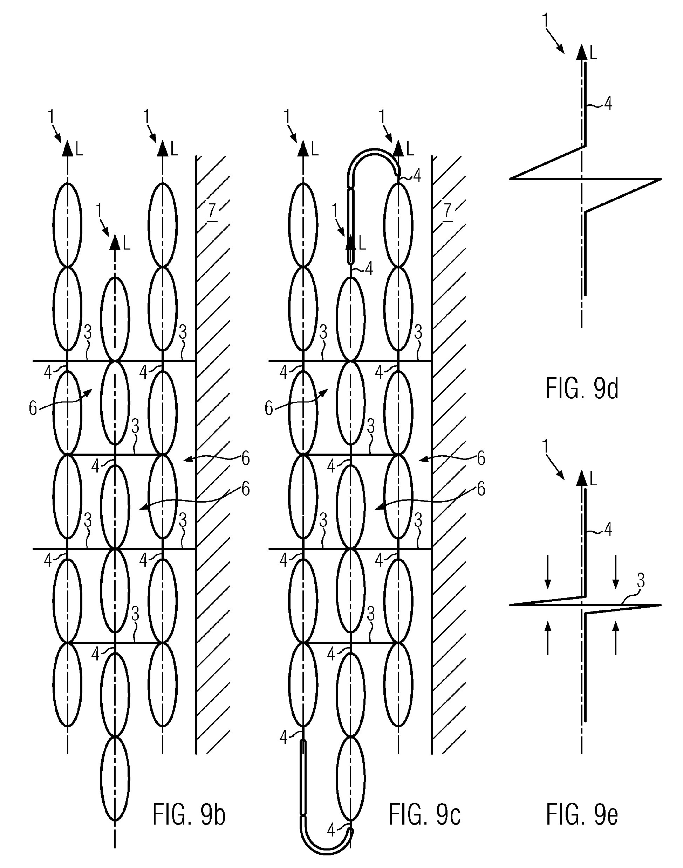

Die beiden letztgenannten Anordnungen/Konfigurationen werden im Zusammenhang mit den Fig. 8, 9a und 9b näher erläutert, wobei Fig. 8 eine parallele Anordnung und Fig. 9a und 9b alternierende Anordnungen von erfindungsgemäßen Latentwärmespeichervorrichtungen 1 zeigen. In der parallelen Anordnung gemäß Fig. 8 sind mehrere erfindungsgemäße Latentwärmespeichervorrichtungen 1 nach dem ersten Ausführungsbeispiel gemäß Fig. 2 exakt parallel zueinander entlang vertikaler Linien L angeordnet, wobei die Latentwärmespeichervorrichtungen 1 durch die Abstandshalter 3 im Idealfall derart auf Abstand gehalten werden, dass sich linear durchgehende Luftspalten 6 zwischen den Latentwärmespeicherabschnitten 2, den Abstandshaltern 3 und den Zwischenstücken 4 bzw. zwischen den Latentwärmespeicherabschnitten 2, den Abstandshaltern 3, den Zwischenstücken 4 und dem angrenzenden Element 7 bilden. Dabei kontaktieren die Abstandshalter 3 die Rückseiten der Zwischenstücke 4 der jeweils angrenzenden Latentwärmespeichervorrichtung 1. In der alternierenden Anordnung gemäß Fig. 9a sind mehrere erfindungsgemäße Latentwärmespeichervorrichtungen 1 nach dem ersten Ausführungsbeispiel gemäß Fig. 2 alternierend entlang vertikaler Linien L angeordnet, wobei die Abstandshalter 3 jeweils die Rückseiten der Latentwärmespeicherabschnitte 2 der jeweils angrenzenden Latentwärmespeichervorrichtung 1 kontaktieren. Dabei werden die Latentwärmespeichervorrichtungen 1 durch die Abstandshalter 3 derart auf Abstand gehalten, dass sich horizontal linear durchgehende Luftspalten 6 zwischen den Latentwärmespeicherabschnitten 2, den Abstandshaltern 3 und den Zwischenstücken 4 bzw. zwischen den Latentwärmespeicherabschnitten 2, den Abstandshaltern 3, den Zwischenstücken 4 und dem angrenzenden Element 7 bilden. Bei einer Anströmung der Latentwärmespeichervorrichtungen 1 in einer gedachten Richtung in die Bildebene hinein oder aus der Bildebene heraus wird im Ergebnis ein besonders geringer Strömungswiderstand erzeugt. Die Strömung wird durch die Abstandshalter derart kanalisiert, dass über die Oberflächen der Latentwärmespeicherabschnitte 2 ein optimaler Wärmeaustausch ermöglicht ist. In Abhängigkeit eines bestimmten Anforderungsprofils kann die Länge der Abstandshalter 3 bzw. die Breite der Luftspalten 6 im Verhältnis zur Dicke der Latentwärmespeicherabschnitte 2 optimiert werden. Fig. 9b zeigt eine Abwandlung der alternierenden Anordnung von erfindungsgemäßen Latentwärmespeichervorrichtungen 1 aus Fig. 9a. Bei dieser Abwandlung weist jeder Latentwärmespeicherabschnitt 2 einen schmalen Einschnürungsbereich auf, in den die Abstandshalter 3 von benachbarten Strängen oder Latentwärmespeichervorrichtungen 1 eingreifen und/oder einrasten können. Die Herstellung dieses Einschnürungsbereichs erfolgt nach dem Befüllen und Verschließen des einzelnen Latentwärmespeicherabschnitts 2 durch Einwirkung eines Presswerkzeuges, wodurch zunächst eine Verdrängung des Befüllungsinhaltes im bereits verschlossenen Latentwärmespeicherabschnitt 2 erzielt wird. Anschließend erfolgt - unter Beibehaltung des Pressdruckes und zusätzlicher Einwirkung von Wärme - ein zumindest partielles Verschweißen der verpressten Folienbereiche. Der fertigungstechnische Entstehungsprozess der Abstandshalter 3 kann analog zu dem in Fig. 10 oder Fig. 13 skizzierten Faltungsprozess eines Zwischenstücks 4 erfolgen, wobei die Faltung des Zwischenstücks 4 gemäß den Fig. 9d und 9e zickzackförmig ausgeführt kann. Dadurch wird ein Abstandshalter 3 geschaffen, der in entgegen gesetzten Richtungen senkrecht zur Linie L vorspringt. Die Abwandlung nach Fig. 9b hat gegenüber der Ausführung nach Fig. 9a folgende Vorteile: Durch das "Einrasten" der Abstandshalter 3 in die Einschnürungsbereiche von benachbarten Strängen oder Latentwärmespeichervorrichtungen 1 erhält die Aufbaustruktur eine zusätzliche Stabilität gegenüber Parallelverschiebung. Die gegenseitige Abstützung der einzelnen Stränge oder Latentwärmespeichervorrichtungen 1 erfolgt ausschließlich gegenüber Bereichen, die von phasenabhängigen Volumenänderungen des Phasenwechselmaterials unbeeinflusst bleiben. Fig. 9c zeigt eine Abwandlung der alternierenden Anordnung von erfindungsgemäßen Latentwärmespeichervorrichtungen 1 aus Fig. 9b, wobei nach einer definierten Anzahl von befüllten Latentwärmespeicherabschnitt 2 zumindest ein leerer Latentwärmespeicherabschnitt 2 in zyklischer Wiederholung in der Kettenstruktur vorgesehen ist, um die beschriebene mäanderförmige Faltung der Latentwärmespeichervorrichtung 1 zu ermöglichen. Diese leeren Latentwärmespeicherabschnitte 2 ermöglichen das Umschwenken außerhalb der Verbindungszone von zwei Latentwärmespeicherabschnitten 2, so dass ein ggf. erwünschter Längsversatz von benachbarten Ketten der Latentwärmespeichervorrichtung 1 zustande kommt.

Die nachstehend beschriebenen Ausführungsbeispiele basieren maßgeblich auf dem ersten Ausführungsbeispiel. Um Wiederholungen zu vermeiden, werden für im Wesentlichen identische Merkmale identische Bezugszeichen wie im ersten Ausführungsbeispiel verwendet und lediglich die Unterschiede zu vorangehenden Ausführungsbeispielen erläutert.

### Zweites Ausführungsbeispiel

Im zweiten Ausführungsbeispiel gemäß Fig. 2 verlaufen die Schweißnähte jeweils zwischen zwei Latentwärmespeicherabschnitten 2 abschnittsweise linear und verbreitern sich im Wesentlichen bogenförmig zu den Längsrändern der Latentwärmespeichervorrichtung 1 hin, so dass der Hohlraum jedes Latentwärmespeicherabschnitts 2 durch Abrundung der Eckbereiche im Wesentlichen oval ausgebildet ist und dadurch einen höheren Innendruck aushalten kann.

### Drittes Ausführungsbeispiel

Im dritten Ausführungsbeispiel gemäß Fig. 3 ist jede Schweißnaht vollumfänglich um einen Hohlraum eines Latentwärmespeicherabschnittes 2 geschlossen und weist eine im Wesentlichen ovale Form auf, wobei die Schweißnaht an zwei gegenüber liegenden Seiten abschnittsweise linear und an zwei gegenüber liegenden Seiten abschnittsweise bogenförmig verläuft. Der Hohlraum jedes Latentwärmespeicherabschnitts 2 ist wie im zweiten Ausführungsbeispiel durch Abrundung der Eckbereiche im Wesentlichen oval ausgebildet und kann dadurch einen höheren Innendruck aushalten.

### Viertes Ausführungsbeispiel

Das vierte Ausführungsbeispiel gemäß Fig. 4 basiert maßgeblich auf dem zweiten Ausführungsbeispiel gemäß Fig. 2, wobei die Foliennaht 5 in der Ansicht gemäß Fig. 4 abweichend vom zweiten Ausführungsbeispiel seitlich verlegt und auf Kette geschweißt ist, so dass sie am linken Längsrand der Latentwärmespeichervorrichtung 1 parallel zur Linie L verläuft.

### Fünftes Ausführungsbeispiel

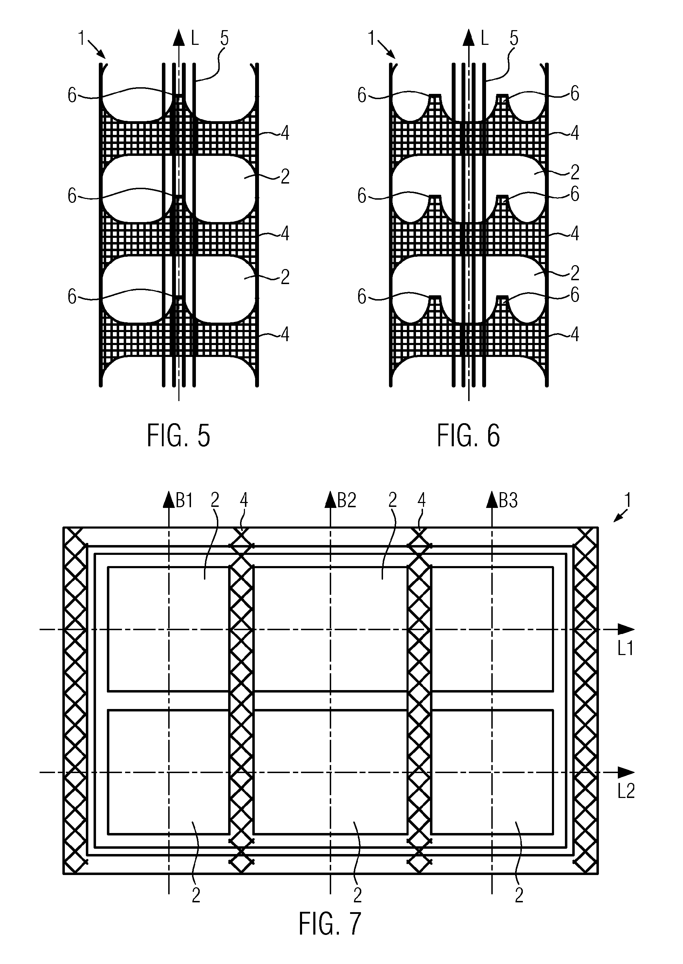

Das fünfte Ausführungsbeispiel gemäß Fig. 5 basiert abermals maßgeblich auf dem zweiten Ausführungsbeispiel gemäß Fig. 2, wobei jede Schweißnaht mittig unterhalb der Foliennaht 5 ein totes Ende 6 aufweist, das im Wesentlichen entlang der Linie L und der Foliennaht 5 in Richtung des Hohlraums weist. Durch diese zusätzliche Stützzone wird der Hohlraum jedes Latentwärmespeicherabschnitts 2 zusätzlich verstärkt und kann einem noch höheren Innendruck standhalten. Das ist besonders vorteilhaft, wenn sich das Phasenwechselmaterial im Zuge des Phasenwechsels ausdehnt. Die Volumenzunahme des Phasenwechselmaterials beim Phasenübergang kann ggf. mehr als 10 % betragen.

### Sechstes Ausführungsbeispiel

Das sechste Ausführungsbeispiel gemäß Fig. 6 basiert erneut maßgeblich auf dem zweiten Ausführungsbeispiel gemäß Fig. 2, wobei jede Schweißnaht beidseitig der Foliennaht 5 jeweils ein totes Ende 6 aufweist, das im Wesentlichen parallel zur Linie L und parallel zur Foliennaht 5 in Richtung des Hohlraums weist. Durch diese beiden zusätzlichen Stützzonen wird der Hohlraum jedes Latentwärmespeicherabschnitts 2 noch weiter verstärkt und kann einem noch höheren Innendruck standhalten.

### Siebtes Ausführungsbeispiel

Im siebten Ausführungsbeispiel gemäß Fig. 7 ist die Latentwärmespeichervorrichtung 1 im Wesentlichen mattenförmig als einzelne, steppdeckenartige Matte ausgebildet, wobei einige der Latentwärmespeicherabschnitte 2 entlang einer ersten Linie L1 angeordnet sind, wobei andere der Latentwärmespeicherabschnitte 2 auf von der ersten Linie L1 abzweigenden, zweiten Linien B1, B2 , B3 angeordnet sind, so dass die Latentwärmespeicherabschnitte 2 matrixförmig in Reihen und Spalten angeordnet sind. Auf die streifenförmigen Zwischenstücke 4 und die streifenförmigen Endbereiche der Latentwärmespeichervorrichtung 1 sind Bänder aufgeschweißt, die senkrecht verlaufende Stützzonen bilden. Die Randnaht ist doppelt ausgeführt. Die Längs- und Quernahten, die die einzelnen Latentwärmespeicherabschnitte 2 bilden bzw. voneinander trennen, können einfach ausgeführt sein.

### Achtes Ausführungsbeispiel

Das achte Ausführungsbeispiel gemäß Fig. 8 basiert maßgeblich auf dem ersten Ausführungsbeispiel gemäß Fig. 1 und ist durch die Art der Herstellung gekennzeichnet. Bei dieser Latentwärmespeichervorrichtung 1 werden die Abstandshalter 3 durch Faltung aus einem linearen Zwischenstück 4 zwischen zwei Latentwärmespeicherabschnitten 2 erzeugt. Dabei wird das Zwischenstück 4 quer zur Linie L und quer zur Ebene der Latentwärmespeicherabschnitte 2 mit einer Kraft beaufschlagt (Fig. 10a), die einen Kamm auf der gegenüberliegenden Seite des Zwischenstücks 4 erzeugt (Fig. 10b). Die Schenkel des Kamms werden anschließend zusammengedrückt und miteinander verschweißt, so dass sich ein Abstandshalter 3 bildet (Fig. 10c), der quer zur Linie L vorspringt, um die benachbarten Latentwärmespeicherabschnitte 2 auf Abstand zu einem angrenzenden Element zu halten (vgl. Fig. 8, 9a und 9b).

Fig. 13 zeigt die Herstellung der Latentwärmespeichervorrichtung 1 nach dem achten Ausführungsbeispiel gemäß Fig. 8 noch einmal in perspektivischer Ansicht, wobei eine zusammengefaltete und geschweißte Siegelnaht als Abstandshalter 3 dient.

### Neuntes Ausführungsbeispiel

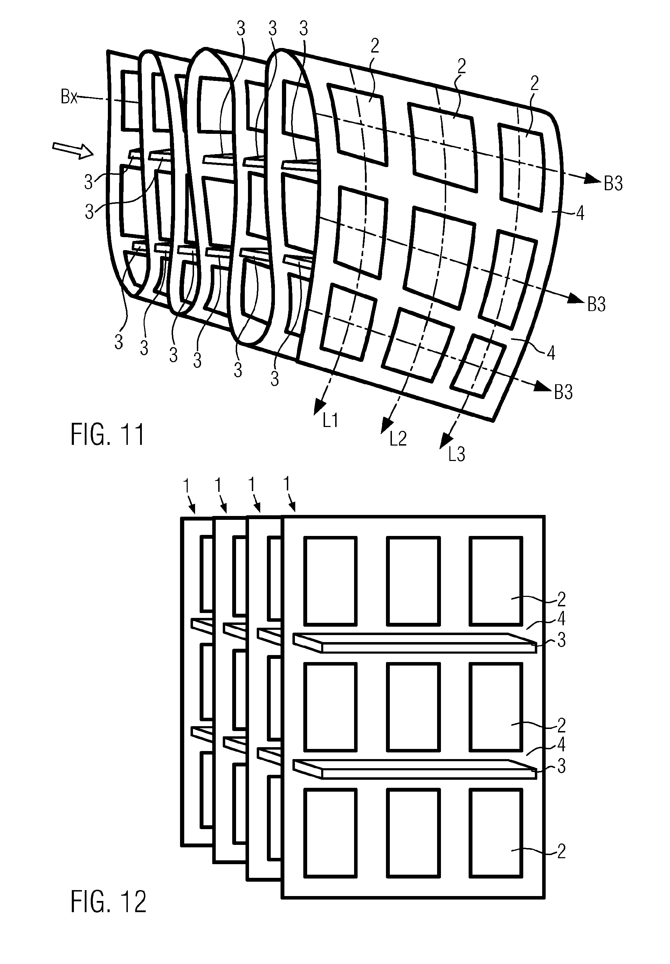

Im neunten Ausführungsbeispiel gemäß Fig. 11 ist eine Latentwärmespeichervorrichtung 1 in Form einer steppdeckenartigen Matte wie im siebten Ausführungsbeispiel gemäß Fig. 7 im We-sentlichen mäanderförmig oder zickzackförmig gefaltet, um eine Vielzahl linear durchgehender Luftspalten 6 zwischen den Latentwärmespeicherabschnitten 2, den Abstandshaltern 3 und den Zwischenstücken 4 zu bilden. Die Latentwärmespeicherabschnitte 2 sind dabei matrixförmig in Reihen von ersten Linien L1, L2, L3 und Spalten von zweiten Linien B1, B2, ..., Bx angeordnet, wobei die zweiten Linien B1, B2, ..., Bx von den ersten Linien L1, L2, L3 abzweigen oder diese kreuzen, um eine Gitterstruktur zu bilden. Die Latentwärmespeichervorrichtung 1 ist derart gefaltet, dass die Latentwärmespeicherabschnitte 2 im Wesentlichen in parallelen, vertikalen Ebenen angeordnet sind und die Luftspalten 6 horizontal durchgehend ausgebildet sind, so dass bei einer Anströmung der Latentwärmespeichervorrichtung 1 in der durch den Pfeil angezeigten Richtung ein möglichst geringer Strömungswiderstand erzeugt wird.

Es liegt weiterhin im Rahmen der Erfindung, dass die vorzugsweise matrixförmig angeordneten Latentwärmespeicherabschnitte (2) in wenigstens einem Gehäuseelement angeordnet sind, was die Wirksamkeit entsprechend optimiert.

Weiterhin ist es möglich, dass wenigstens ein vorzugsweise matrixförmig angeordneter Latentwärmespeicherabschnitt (2) in einem Gehäuseelement angeordnet ist.

Die Anordnung von wenigstens zwei Gehäuseelementen, in denen wenigstens ein Latentwärmespeicherabschnitt (2) angeordnet ist, in beispielsweise einer Reihenanordnung, hat den Vorteil, dass die Wechselwirkungsstrecke des Mediums mit den Latentwärmespeicherabschnitten (2), welche matrixförmig in Reihen und Spalten angeordnet sind, verlängert ist und somit optimierter wirkt.

Zur weiteren Optimierung können die mit den vorzugsweise matrixförmig angeordneten Latentwärmespeicherabschnitten (2) befüllten Gehäuseelemente aneinander angeordnet sein. Diese Anordnung kann sich sowohl linear in Form einer oder mehrerer Reihen gestalten, es liegt jedoch auch im Rahmen der Erfindung, dass die Gehäuseelemente übereinander, untereinander, nebeneinander, voreinander bzw. hintereinander angeordnet sind. Weiterhin hat sich als vorteilhaft herausgestellt, wenn diese Gehäuselemente voneinander beabstandet angeordnet sind, dabei kann dieser Abstand etwa 5 cm bis 20 cm, bevorzugt 10 cm betragen.

### Zehntes Ausführungsbeispiel

Im zehnten Ausführungsbeispiel gemäß Fig. 12 ist eine Latentwärmespeichervorrichtung 1 aus einer Vielzahl paralleler, steppdeckenartiger Matten wie im siebten Ausführungsbeispiel gemäß Fig. 7 aufgebaut, wobei die Matten derart parallel hintereinander angeordnet sind, um eine Vielzahl linear durchgehender Luftspalten 6 zwischen den Latentwärmespeicherabschnitten 2, den Abstandshaltern 3 und den Zwischenstücken 4 zu bilden. Die Latentwärmespeicherabschnitte 2 jeder Matte sind dabei matrixförmig in Reihen und Spalten angeordnet, um eine Gitterstruktur zu bilden. Ferner sind die Matten im Wesentlichen in parallelen, vertikalen Ebenen angeordnet und die Luftspalten 6 sind horizontal durchgehend ausgebildet, so dass bei einer Anströmung der Latentwärmespeichervorrichtung 1 in der durch den Pfeil angezeigten Richtung ein möglichst geringer Strömungswiderstand erzeugt wird. Es liegt weiterhin im Rahmen der Erfindung, dass die vorzugsweise matrixförmig angeordneten Latentwärmespeicherabschnitte (2) in wenigstens einem Gehäuseelement angeordnet sind, was die Wirksamkeit entsprechend optimiert.

Weiterhin ist es möglich, dass wenigstens ein vorzugsweise matrixförmig angeordneter Latentwärmespeicherabschnitt (2) in einem Gehäuseelement angeordnet ist.

Die Anordnung von wenigstens zwei Gehäuseelementen in denen wenigstens ein Latentwärmespeicherabschnitt (2) angeordnet ist in beispielsweise einer Reihenanordnung, hat den Vorteil, dass die Wechselwirkungsstrecke des Mediums mit den Latentwärmespeicherabschnitten (2), welche matrixförmig in Reihen und Spalten angeordnet sind, verlängert ist und somit optimierter wirkt.

Zur weiteren Optimierung können die mit den vorzugsweise matrixförmig angeordneten Latentwärmespeicherabschnitten (2) befüllten Gehäuseelemente aneinander angeordnet sein. Diese Anordnung kann sich sowohl linear in Form einer oder mehrerer Reihen gestalten, es liegt jedoch auch im Rahmen der Erfindung, dass die Gehäuseelemente übereinander, untereinander, nebeneinander, voreinander bzw. hintereinander angeordnet sind. Weiterhin hat sich als vorteilhaft herausgestellt, wenn diese Gehäuselemente voneinander beabstandet angeordnet sind, dabei kann dieser Abstand etwa 5 cm bis 20 cm, bevorzugt 10 cm betragen.

### Elftes Ausführungsbeispiel

Fig. 14 zeigt eine Latentwärmespeichervorrichtung 1 nach dem elften Ausführungsbeispiel, das auf dem achten Ausführungsbeispiel gemäß Fig. 8 basiert, in perspektivischer Ansicht, wobei ein mit dem Rücken an die Siegelnaht des Zwischenstücks 4 angebrachtes T-Extrusionsprofil als Abstandshalter dient. Auch bei dieser Ausführung wird bei einer Anströmung der Latentwärmespeichervorrichtung 1 in der durch den Pfeil angezeigten Richtung ein möglichst geringer Strömungswiderstand erzeugt.

### Zwölftes Ausführungsbeispiel

Fig. 15 zeigt eine Latentwärmespeichervorrichtung 1 nach dem zwölften Ausführungsbeispiel, das auf dem achten Ausführungsbeispiel gemäß Fig. 8 basiert, in perspektivischer Ansicht, wobei ein an die Siegelnaht des Zwischenstücks 4 angebrachter Block aus Schaumstoff als Abstandshalter dient, um unnützliche Strömungskanäle zu blockieren. Da über das Zwischenstück 4 kein Wärmeaustausch stattfindet, ist es vorteilhaft, wenn die gesamte Luftströmung über die Oberflächen der Latentwärmespeicherabschnitte 2 geführt wird.

### Verfahren zur Herstellung der Latentwärmespeichervorrichtung 1

Ein bevorzugtes Verfahren zur Herstellung der Latentwärmespeichervorrichtung 1 umfasst die Schritte:
- Bereitstellen einer Latentwärmespeichervorrichtung 1 mit verbundenen Latentwärmespeicherabschnitten 2 und wenigstens einem Abstandhalter 3; und
- Anordnen der Latentwärmespeicherabschnitte 2 und des Abstandhalters 3, so dass sich zwischen wenigstens einem der Latentwärmespeicherabschnitte 2 und wenigstens einem der Abstandshalter 3 und gegebenenfalls wenigstens einem angrenzenden Element 7 ein durchgehender Kanal 6 bildet (vgl. Fig. 8, 9a und 9b).
Dadurch kann auch bei einer kompakten Anordnung der Latentwärmespeichervorrichtung 1 eine optimale Umströmung der Latentwärmespeicherabschnitte 2 und damit ein optimaler Wärmeaustausch mit einem Wärmeträgermedium über die Oberflächen der einzelnen Latentwärmespeicherabschnitte sichergestellt werden.

Die Erfindung ist nicht auf die offenbarten Ausführungsbeispiele beschränkt. Vorteilhafte Weiterbildungen der Erfindung ergeben sich durch beliebige Kombinationen der in den Ansprüchen, den Zeichnungen und der Beschreibung offenbarten Merkmale.

## Patentansprüche

1. Latentwärmespeichervorrichtung (1) mit verbundenen Latentwärmespeicherabschnitten (2), die entlang einer Linie (L) angeordnet sind, **gekennzeichnet durch** wenigstens einen Abstandshalter (3), der im Wesentlichen quer zur Linie (L) vorspringt, um wenigstens einen der Latentwärmespeicherabschnitte (2) auf Abstand zu einem angrenzenden Element (7) zu halten.

2. Latentwärmespeichervorrichtung (1) nach Anspruch 1, **dadurch gekennzeichnet, dass** die Latentwärmespeichervorrichtung (1) wenigstens eine der folgenden Anforderungen erfüllt:
a. Wenigstens einige, vorzugsweise alle der Latentwärmespeicherabschnitte (2) sind in einer Ebene angeordnet.
b. Die Linie (L) verläuft zumindest abschnittsweise gerade, spiralförmig, schneckenförmig, schleifenförmig, mäanderförmig und/oder zickzackförmig.
c. Die Linie (L) erstreckt sich in einer im Wesentlichen vertikalen Ebene, vorzugsweise in einer im Wesentlichen vertikalen Richtung.
d. Die Linie (L) ist in einer, zwei, drei oder mehr Krümmungsebenen gekrümmt.
e. Die Latentwärmespeichervorrichtung (1) bildet zwischen wenigstens einem der Latentwärmespeicherabschnitte (2), wenigstens einem der Abstandshalter (3) und wenigstens dem einen angrenzenden Element (7) einen vorzugsweise linear durchgehenden Kanal.
f. Die Latentwärmespeichervorrichtung (1) bildet zwischen wenigstens einem der Latentwärmespeicherabschnitte (2) und wenigstens einem der Abstandshalter (3) einen vorzugsweise linear durchgehenden Kanal.

3. Latentwärmespeichervorrichtung (1) nach wenigstens einem der vorangehenden Ansprüche, **dadurch gekennzeichnet, dass** zumindest einer der Latentwärmespeicherabschnitte (2) wenigstens eine der folgenden Anforderungen erfüllt:
a. Der Latentwärmespeicherabschnitt (2) ist als Hohlkörper ausgebildet und vorzugsweise mit einem Phasenwechselmaterial befüllt.
b. Der Latentwärmespeicherabschnitt (2) ist im Wesentlichen kissenförmig ausgebildet.
c. Der Latentwärmespeicherabschnitt (2) ist flach ausgebildet und erstreckt sich im Wesentlichen in einer Ebene, welche vorzugsweise die Linie (L) und eine dazu senkrechte Linie umfasst.
d. Der Latentwärmespeicherabschnitt (2) umfasst einen Hohlraum, der aus wenigstens einer flexiblen Folie mit wenigstens einer Schweißnaht ausgebildet ist, wobei die Schweißnaht den Hohlraum zumindest abschnittsweise, vorzugsweise vollumfänglich, umgibt und/oder verschließt, wobei sich die Schweißnaht bevorzugt zumindest abschnittsweise entlang der Linie (L) und/oder zumindest abschnittsweise quer zur Linie (L) und/oder zumindest abschnittsweise quer zu einer Erstreckungsrichtung des Abstandshalters (3) erstreckt, wobei die Schweißnaht weiter bevorzugt zumindest abschnittsweise linear und/oder zumindest abschnittsweise bogenförmig verläuft, wobei die Schweißnaht besonders bevorzugt wenigstens ein totes Ende (6) aufweist, das in Richtung des Hohlraums weist.
e. Der Latentwärmespeicherabschnitt (2) ist identisch zu mindestens einem weiteren Latentwärmespeicherabschnitt (2), vorzugsweise einem entlang der Linie (L) benachbarten Latentwärmespeicherabschnitt (2), ausgebildet.
f. Der Latentwärmespeicherabschnitt (2) ist mit wenigstens einem weiteren Latentwärmespeicherabschnitt (2), vorzugsweise einem entlang der Linie (L) benachbarten Latentwärmespeicherabschnitt (2), über wenigstens ein Zwischenstück (4) verbunden, wobei das Zwischenstück (4) zumindest abschnittsweise linear und/oder zumindest abschnittsweise bogenförmig verläuft.
g. Der Latentwärmespeicherabschnitt (2) ist mit wenigstens einem weiteren Latentwärmespeicherabschnitt (2), vorzugsweise einem entlang der Linie (L) benachbarten Latentwärmespeicherabschnitt (2), beweglich verbunden.
h. Der Latentwärmespeicherabschnitt (2) ist gegenüber wenigstens einem entlang der Linie (L) benachbarten Latentwärmespeicherabschnitt (2) um eine Achse schwenkbar, die sich im Wesentlichen quer zur Linie (L) und/oder quer zu einer Erstreckungsrichtung (R) des Abstandshalters (3) erstreckt.
i. Der Latentwärmespeicherabschnitt (2) umfasst eine Aufnahme, in welcher ein Abstandshalter (3) zumindest abschnittsweise aufnehmbar, vorzugsweise verrastbar ist, wobei die Aufnahme bevorzugt als Einschnürung ausgebildet ist.
j. Der Latentwärmespeicherabschnitt (2) umfasst einen Klebstoffapplikationsbereich, in welchem ein Abstandshalter (3) mit dem Latentwärmespeicherabschnitt verklebbar ist, wobei der Klebstoffapplikationsbereich vorzugsweise als Aufnahme ausgebildet ist, in welcher der Abstandshalter (3) zumindest abschnittsweise aufnehmbar, vorzugsweise verrastbar ist.
k. Wenigstens einige der Latentwärmespeicherabschnitte (2) sind um zueinander parallele Schwenkachsen schwenkbar.
l. Die Latentwärmespeicherabschnitte (2) sind kettenförmig, netzförmig, mattenförmig oder gitterförmig, vorzugsweise raumgitterförmig, angeordnet und/oder verbunden.

4. Latentwärmespeichervorrichtung (1) nach wenigstens einem der vorangehenden Ansprüche, **dadurch gekennzeichnet, dass** der Abstandshalter (3) wenigstens eine der folgenden Anforderungen erfüllt:
a. Der Abstandshalter (3) ist an wenigstens einem der Latentwärmespeicherabschnitte (2) und/oder an wenigstens einem Zwischenstück (4) zwischen zwei Latentwärmespeicherabschnitten (2) angeordnet.
b. Der Abstandshalter (3) ist im Wesentlichen noppenförmig, stegförmig, rippenförmig, falzförmig, kammförmig oder dergleichen ausgebildet.
c. Der Abstandshalter (3) umgibt zumindest abschnittsweise, vorzugsweise vollumfänglich, wenigstens einen der Latentwärmespeicherabschnitte (2).
d. Der Abstandshalter (3) erstreckt sich zumindest abschnittsweise, vorzugsweise vollständig, in einer zur Linie (L) senkrechten Ebene.
e. Der Abstandshalter (3) ist als Extrusionsprofil ausgebildet.
f. Der Abstandshalter (3) ist zumindest abschnittsweise als offenes Profil, vorzugsweise als V-Profil oder als T-Profil ausgebildet.
g. Der Abstandshalter (3) ist zumindest abschnittsweise als geschlossenes Profil, vorzugsweise als Hohlprofil, bevorzugt als Dreieckshohlprofil bzw. Δ-Profil oder als Rechteckhohlprofil ausgebildet.
h. Der Abstandshalter (3) ist mit der Latentwärmespeichervorrichtung (1) verbunden, vorzugsweise kraftschlüssig, formschlüssig, stoffschlüssig, bevorzugt fest und/oder unlösbar mit der Latentwärmespeichervorrichtung (1) verbunden.
i. Der Abstandshalter (3) ist mit wenigstens einem der Latentwärmespeicherabschnitte (2) und/oder mit wenigstens einem Zwischenstück (4) zwischen zwei Latentwärmespeicherabschnitten (2) verbunden.
j. Der Abstandshalter (3) ist monolithisch mit der Latentwärmespeichervorrichtung (1), vorzugsweise mit wenigstens einem der Latentwärmespeicherabschnitte (2) und/oder mit wenigstens einem Zwischenstück (4) zwischen zwei Latentwärmespeicherabschnitten (2) ausgebildet.
k. Der Abstandshalter (3) ist an das Material der Latentwärmespeichervorrichtung (1) angeformt.
l. Der Abstandshalter (3) besteht aus Schaumstoff.
m. Der Abstandshalter (3) ist durch Umformung, vorzugsweise durch Faltung, aus dem Material der Latentwärmespeichervorrichtung (1) ausgebildet.
n. Der Abstandshalter (3) steht quer zur Linie (L) über wenigstens einen Latentwärmespeicherabschnitt (2), vorzugsweise über wenigstens einen entlang der Linie (L) benachbarten Latentwärmespeicherabschnitt (2) hervor.
o. Der Abstandshalter (3) steht in wenigstens einer Richtung, vorzugsweise in unterschiedlichen Richtungen, bevorzugt in entgegen gesetzten Richtungen, über wenigstens einen Latentwärmespeicherabschnitt (2) hervor.
p. Der Abstandshalter (3) ist aerodynamisch vorteilhaft ausgebildet und/oder angeordnet und/oder ausgerichtet.
q. Der Abstandshalter (3) ist als Luftleitfläche ausgebildet, die eine Luftströmung in Richtung wenigstens eines Latentwärmespeicherabschnitts (2), vorzugsweise in Richtung wenigstens eines entlang der Linie (L) benachbarten Latentwärmespeicherabschnitts (2) lenkt.

5. Latentwärmespeichervorrichtung (1) nach wenigstens einem der vorangehenden Ansprüche, **gekennzeichnet durch** eine Mehrzahl der Abstandshalter (3), die wenigstens eine der folgenden Anforderungen erfüllt:
a. Die Abstandshalter (3) sind in regelmäßigen Abständen entlang der Linie (L) angeordnet.
b. Die Abstandshalter (3) stehen in Bezug auf die Linie (L) in jeweils in derselben Richtung hervor.
c. Die Abstandshalter (3) stehen in Bezug auf die Linie (L) in einem regelmäßig wiederkehrenden Muster in unterschiedlichen Richtungen hervor.
d. Die Abstandshalter (3) stehen in Bezug auf die Linie (L) in diametral entgegen gesetzten Richtungen hervor.
e. Die Abstandshalter (3) erstrecken sich in im Wesentlichen parallelen Ebenen und/oder sind im Wesentlichen parallel zueinander angeordnet.

6. Latentwärmespeichervorrichtung (1) nach wenigstens einem der vorangehenden Ansprüche, **dadurch gekennzeichnet, dass** die Latentwärmespeichervorrichtung (1) elastisch oder plastisch verformbar ist.

7. Latentwärmespeichervorrichtung (1) nach wenigstens einem der vorangehenden Ansprüche, **dadurch gekennzeichnet, dass** die Latentwärmespeichervorrichtung (1) als Folienschlauch mit wenigstens einer Foliennaht (5) ausgebildet ist, wobei sich die Foliennaht (5) im Wesentlichen entlang der Linie (L) erstreckt, wobei die Foliennaht (5) bevorzugt an einem der beiden Längsränder der Latentwärmespeichervorrichtung (1) oder dazwischen, besonders bevorzugt zwischen den beiden Längsrändern der Latentwärmespeichervorrichtung (1) mittig und/oder parallel dazu verläuft.

8. Latentwärmespeichervorrichtung (1) mit verbundenen Latentwärmespeicherabschnitten (2), vorzugsweise nach wenigstens einem der vorangehenden Ansprüche, wobei einige der Latentwärmespeicherabschnitte (2) entlang einer ersten Linie (L1, .., Ln) angeordnet sind, **dadurch gekennzeichnet, dass** wenigstens einer der Latentwärmespeicherabschnitte (2) auf wenigstens einer von der ersten Linie (L1, .., Ln) abzweigenden, zweiten Linie (B1, .., Bn) angeordnet ist.

9. Latentwärmespeichervorrichtung (1) nach wenigstens einem der vorangehenden Ansprüche, **dadurch gekennzeichnet, dass** die Latentwärmespeicherabschnitte (2) matrixförmig in Reihen und Spalten angeordnet sind.

10. Latentwärmespeichervorrichtung (1) nach wenigstens einem der vorangehenden Ansprüche, **dadurch gekennzeichnet, dass** ein vorzugsweise matrixförmig angeordneter Latentwärmespeicherabschnitt (2) in wenigstens einem Gehäuseelement angeordnet ist.

11. Latentwärmespeichervorrichtung (1) nach wenigstens einem der vorangehenden Ansprüche, **dadurch gekennzeichnet, dass** wenigstens ein vorzugsweise matrixförmig angeordneter Latentwärmespeicherabschnitt (2) in einem Gehäuseelement angeordnet ist.

12. Latentwärmespeichervorrichtung (1) nach wenigstens einem der vorangehenden Ansprüche, **dadurch gekennzeichnet, dass** wenigstens zwei Gehäuseelemente aneinander angeordnet sind.

13. Verfahren zur Herstellung einer Latentwärmespeichervorrichtung (1), vorzugsweise einer Latentwärmespeichervorrichtung (1) nach wenigstens einem der vorangehenden Ansprüche, umfassend die Schritte:
a. Bereitstellen einer Latentwärmespeichervorrichtung (1) mit verbundenen Latentwärmespeicherabschnitten (2) und wenigstens einem Abstandhalter (3);
b. Anordnen der Latentwärmespeicherabschnitte (2) und des Abstandhalters (3), so dass sich zwischen wenigstens einem der Latentwärmespeicherabschnitte (2) und dem Abstandshalter (3) und gegebenenfalls einem angrenzenden Element (7) ein durchgehender Kanal (6) bildet.
